# EUROPEAN PATENT APPLICATION

(11) **EP 4 300 338 A1**
(43) Date of publication of application: **03.01.2024**
(21) Application number: 22900194.6
(22) Date of filing: 04.11.2022
(51) Int. Cl.: G06F 21/60, G06F 21/62, H04L 9/08

(54) **COMPUTER FILE SECURITY ENCRYPTION METHOD, COMPUTER FILE SECURITY DECRYPTION METHOD, AND READABLE STORAGE MEDIUM**

(30) Priority: 30.11.2021 CN 202111438582
(71) Applicant: Onlyowner Technology Limited, Kowloon, Hong Kong 999077 (HK)
(72) Inventor: CHEN, Hong, Hong Kong 999077 (CN); LIU, Zhongkui, Hong Kong 999077 (CN); ZHANG, Yabin, Hong Kong 999077 (CN)
(74) Representative: Murgitroyd & Company
(86) International application number: PCT/CN2022/129707
(87) International publication number: WO 2023/098389

(57) **Abstract**

A security encryption method for computer files, a security decryption method for computer files, and a readable storage medium belong to the field of computer technology security and are used for solving the problem of data storage security. The encryption method and the decryption method are applied to a computer-readable storage medium and a computer. The computer sends a plaintext file or a ciphertext file to the computer-readable storage medium for executing an encryption or decryption operation, and then the computer-readable storage medium transmits the ciphertext file or the plaintext file to the computer. The prevent invention has the beneficial effects that both the encryption method for files and the decryption method for files are recorded in the computer-readable storage medium, such that a user only needs to possess the computer-readable storage medium; all data encrypted by the computer-readable storage medium cannot be decrypted by an illegal user; and all required critical keys do not need to be memorized by the user or stored by other means.

## Description

### TECHNICAL FIELD

The present disclosure belongs to the field of computer technology security, and particularly relates to a security encryption method for computer files, a security decryption method for computer files, and a readable storage medium.

### BACKGROUND

At present, most sensitive data files that need to be protected are stored on computers in a relatively closed internal network environment, but when a hacker enters the internal network environment from a network loophole, the sensitive data files stored on the computers can be easily obtained by the hacker, and the hacker does not need to attack the computer storing the data files and the files themselves. If the sensitive data files that need to be protected are encrypted and are decrypted with a password when needed, a user needs to remember the password, which may be forgotten; and because of human memory, the password set by the user is generally not too complex and easy to crack by brute force.

### SUMMARY

To solve the above problems, the present disclosure provides a security encryption method for computer files, a security decryption method for computer files, and a readable storage medium.

The present disclosure adopts the following technical solutions:
There is provided a security encryption method for computer files, applied to a computer-readable storage medium and a computer, where the computer sends a plaintext file to the computer-readable storage medium for executing an encryption operation, and then the computer-readable storage medium encrypts the plaintext file and then transmits an encrypted plaintext file to the computer; and the encryption method includes the following steps:
S1: generating an asymmetric key pair (s, p) with a domestic asymmetric cryptographic algorithm SM2 and saving the asymmetric key pair, wherein s is a private key and p is a public key;
S2: receiving the plaintext file x from the computer, and generating a random number r of 128 bits, that is, 16 bytes and saving the random number;
S3: using the random number r as a symmetric key of a domestic symmetric cryptographic algorithm SM4, and encrypting the plaintext file x with the domestic symmetric cryptographic algorithm SM4 to obtain a ciphertext x' of x;
S4: using the public key p as an encryption public key of the domestic asymmetric cryptographic algorithm SM2, and encrypting a symmetric key r with the domestic asymmetric cryptographic algorithm SM2 and the public key p to obtain a ciphertext r' of the symmetric key r;
S5: performing data splicing on the ciphertext x' and the ciphertext r' to obtain data x' + r';
S6: calculating the data x' + r' with a domestic cryptographic digest algorithm SM3 to obtain a digest h and saving the digest;
S7: using the private key s as a signature private key of the domestic asymmetric cryptographic algorithm SM2, and signing the digest h with the domestic asymmetric cryptographic algorithm SM2 and the private key s to obtain a signature value sign;
S8: assembling the ciphertext x', the ciphertext r', the data digest h, and the signature value sign to obtain an encrypted ciphertext file with content of x' + r' + h + sign; and
S9: returning the ciphertext file to the computer for storing the encrypted ciphertext file.

There is provided a security decryption method for computer files corresponding to the above encryption method, applied to a computer-readable storage medium and a computer, where the computer sends a ciphertext file to the computer-readable storage medium for executing a decryption operation, and then the computer-readable storage medium decrypts the ciphertext file and then transmits a decrypted ciphertext file to the computer; and the decryption method includes the following steps:
S1: receiving the ciphertext file with content of x' + r' + h + sign from the computer;
S2: calculating digest data of x' + r' with a domestic cryptographic digest algorithm SM3 and comparing the digest data with a digest h: if the comparison succeeds, proceeding to a next step, or if the comparison fails, indicating that ciphertext file data has been corrupted rather than cracked;
S3: using a public key p as a signature verification private key of a domestic asymmetric cryptographic algorithm SM2, and verifying sign data with the domestic asymmetric cryptographic algorithm SM2: if the verification succeeds, proceeding to a next step, or if the verification fails, indicating that the ciphertext file data has been corrupted rather than cracked or a file encryption and decryption device of a legal user is not used;
S4: using a private key s as a decryption private key of the domestic asymmetric cryptographic algorithm SM2, and decrypting data of a ciphertext r' with the domestic asymmetric cryptographic algorithm SM2 to obtain a symmetric key r;
S5: decrypting a ciphertext x' with the symmetric key r to obtain plaintext data x; and
S6: returning the decrypted plaintext data x to the computer for storing a decrypted plaintext file.

There is provided a computer-readable storage medium, where the readable storage medium is internally provided with a file encryption and decryption chip recording a computer program, a domestic asymmetric cryptographic algorithm SM2, a domestic symmetric cryptographic algorithm SM4, and a domestic cryptographic digest algorithm SM3, and when the readable storage medium receives a plaintext file and an encryption task transmitted from a computer, the computer program is controlled by a processor to execute the security encryption method for computer files as described above and return an encrypted ciphertext file to the computer.

There is provided a computer-readable storage medium, where the readable storage medium is internally provided with a file encryption and decryption chip recording a computer program, a domestic asymmetric cryptographic algorithm SM2, a domestic symmetric cryptographic algorithm SM4, and a domestic cryptographic digest algorithm SM3, and when the readable storage medium receives a ciphertext file and a decryption task transmitted from a computer, the computer program is controlled by a processor to execute the security decryption method for computer files as described above and return a decrypted plaintext file to the computer.

The prevent invention has the beneficial effects that both the encryption method for files and the decryption method for files are recorded in the computer-readable storage medium, such that a user only needs to possess the computer-readable storage medium; all data encrypted by the computer-readable storage medium cannot be decrypted by an illegal user, because the file decryption requires the symmetric key r which can be obtained necessarily using the private key s only existing in the computer-readable storage medium and randomly generated, and the illegal user cannot obtain the private key s; and all required critical keys do not need to be memorized by the user or stored by other means.

### BRIEF DESCRIPTION OF THE DRAWINGS

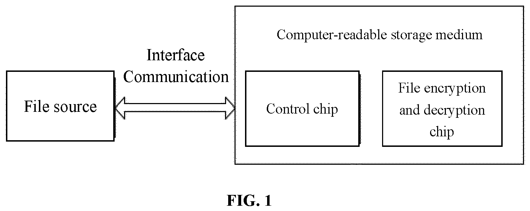

FIG. 1 is a structure block diagram of a computer and a computer-readable storage medium according to the present disclosure.

### DETAILED DESCRIPTION OF THE EMBODIMENTS

To make the objective, the technical solutions and advantages of the present disclosure clearer, the present disclosure is further described in detail below in conjunction with the accompanying drawings and the embodiments. It should be understood that the specific embodiments described herein are only for explaining but not for limiting the present disclosure.

As shown in FIG. 1, there is provided a security encryption method for computer files, applied to a computer-readable storage medium and a computer, where the computer sends a plaintext file to the computer-readable storage medium for executing an encryption operation, and then the computer-readable storage medium encrypts the plaintext file and then transmits an encrypted plaintext file to the computer; and the encryption method includes the following steps:
S1: generating an asymmetric key pair (s, p) with a domestic asymmetric cryptographic algorithm SM2 and saving the asymmetric key pair, wherein s is a private key and p is a public key;
S2: receiving the plaintext file x from the computer, and generating a random number r of 128 bits, that is, 16 bytes and saving the random number;
S3: using the random number r as a symmetric key of a domestic symmetric cryptographic algorithm SM4, and encrypting the plaintext file x with the domestic symmetric cryptographic algorithm SM4 to obtain a ciphertext x' of x;
S4: using the public key p as an encryption public key of the domestic asymmetric cryptographic algorithm SM2, and encrypting a symmetric key r with the domestic asymmetric cryptographic algorithm SM2 and the public key p to obtain a ciphertext r' of the symmetric key r;
S5: performing data splicing on the ciphertext x' and the ciphertext r' to obtain data x' + r';
S6: calculating the data x' + r' with a domestic cryptographic digest algorithm SM3 to obtain a digest h and saving the digest;
S7: using the private key s as a signature private key of the domestic asymmetric cryptographic algorithm SM2, and signing the digest h with the domestic asymmetric cryptographic algorithm SM2 and the private key s to obtain a signature value sign;
S8: assembling the ciphertext x', the ciphertext r', the data digest h, and the signature value sign to obtain an encrypted ciphertext file with content of x' + r' + h + sign; and
S9: returning the ciphertext file to the computer for storing the encrypted ciphertext file.

By the above encryption method, the computer can send the plaintext file x to an encryption terminal for encrypting the plaintext file into the ciphertext file x' + r' + h + sign.

As shown in FIG. 1, there is provided a security decryption method for computer files corresponding to the above encryption method, applied to a computer-readable storage medium and a computer, where the computer sends a ciphertext file to the computer-readable storage medium for executing a decryption operation, and then the computer-readable storage medium decrypts the ciphertext file and then transmits a decrypted ciphertext file to the computer; and the decryption method includes the following steps:
S1: receiving the ciphertext file with content of x' + r' + h + sign from the computer;
S2: calculating digest data of x' + r' with a domestic cryptographic digest algorithm SM3 and comparing the digest data with a digest h: if the comparison succeeds, proceeding to a next step, or if the comparison fails, indicating that ciphertext file data has been corrupted rather than cracked;
S3: using a public key p as a signature verification private key of a domestic asymmetric cryptographic algorithm SM2, and verifying sign data with the domestic asymmetric cryptographic algorithm SM2: if the verification succeeds, proceeding to a next step, or if the verification fails, indicating that the ciphertext file data has been corrupted rather than cracked or a file encryption and decryption device of a legal user is not used;
S4: using a private key s as a decryption private key of the domestic asymmetric cryptographic algorithm SM2, and decrypting data of a ciphertext r' with the domestic asymmetric cryptographic algorithm SM2 to obtain a symmetric key r;
S5: decrypting a ciphertext x' with the symmetric key r to obtain plaintext data x; and
S6: returning the decrypted plaintext data x to the computer for storing a decrypted plaintext file.

As shown in FIG. 1, there is provided a computer-readable storage medium, where the readable storage medium is internally provided with a file encryption and decryption chip recording a computer program, a domestic asymmetric cryptographic algorithm SM2, a domestic symmetric cryptographic algorithm SM4, and a domestic cryptographic digest algorithm SM3, and when the readable storage medium receives a plaintext file and an encryption task transmitted from a computer, the computer program is controlled by a processor to execute the security encryption method for computer files as described above and return an encrypted ciphertext file to the computer.

As shown in FIG. 1, there is provided a computer-readable storage medium, where the readable storage medium is internally provided with a file encryption and decryption chip recording a computer program, a domestic asymmetric cryptographic algorithm SM2, a domestic symmetric cryptographic algorithm SM4, and a domestic cryptographic digest algorithm SM3, and when the readable storage medium receives a ciphertext file and a decryption task transmitted from a computer, the computer program is controlled by a processor to execute the security decryption method for computer files as described above and return a decrypted plaintext file to the computer.

The computer-readable storage medium is inserted into the computer only when the file encryption or decryption is needed, and is stored separately from the computer at other times. In this embodiment, the computer-readable storage medium may be a USB flash disk, which is connected to and communicates with the computer by a USB interface for file transmission. During the file encryption, the computer transmits the plaintext file to the USB flash disk, and the USB flash disk encrypts the plaintext file and then returns the encrypted plaintext file to the computer by the USB interface. During the file decryption, the computer transmits the ciphertext file to the USB flash disk, and the USB flash disk decrypts the ciphertext file and then returns the decrypted ciphertext file to the computer by the USB interface.

The file encryption and decryption chip may be an existing common encryption and decryption control chip. The prevent invention has the beneficial effects that both the encryption method for files and the decryption method for files are recorded in the computer-readable storage medium, such that a user only needs to possess the computer-readable storage medium; all data encrypted by the computer-readable storage medium cannot be decrypted by an illegal user, because the file decryption requires the symmetric key r which can be obtained necessarily using the private key s only existing in the computer-readable storage medium and randomly generated, and the illegal user cannot obtain the private key s; and all required critical keys do not need to be memorized by the user or stored by other means.

## Claims

1. A security encryption method for computer files, applied to a computer-readable storage medium and a computer, wherein the computer sends a plaintext file to the computer-readable storage medium for executing an encryption operation, and then the computer-readable storage medium encrypts the plaintext file and then transmits an encrypted plaintext file to the computer; and the encryption method comprises the following steps:
S1: generating an asymmetric key pair (s, p) with a domestic asymmetric cryptographic algorithm SM2 and saving the asymmetric key pair, wherein s is a private key and p is a public key;
S2: receiving the plaintext file x from the computer, and generating a random number r of 128 bits, that is, 16 bytes and saving the random number;
S3: using the random number r as a symmetric key of a domestic symmetric cryptographic algorithm SM4, and encrypting the plaintext file x with the domestic symmetric cryptographic algorithm SM4 to obtain a ciphertext x' of x;
S4: using the public key p as an encryption public key of the domestic asymmetric cryptographic algorithm SM2, and encrypting a symmetric key r with the domestic asymmetric cryptographic algorithm SM2 and the public key p to obtain a ciphertext r' of the symmetric key r;
S5: performing data splicing on the ciphertext x' and the ciphertext r' to obtain data x' + r';
S6: calculating the data x' + r' with a domestic cryptographic digest algorithm SM3 to obtain a digest h and saving the digest;
S7: using the private key s as a signature private key of the domestic asymmetric cryptographic algorithm SM2, and signing the digest h with the domestic asymmetric cryptographic algorithm SM2 and the private key s to obtain a signature value sign;
S8: assembling the ciphertext x', the ciphertext r', the data digest h, and the signature value sign to obtain an encrypted ciphertext file with content of x' + r' + h + sign; and
S9: returning the ciphertext file to the computer for storing the encrypted ciphertext file.

2. A security decryption method for computer files corresponding to the encryption method according to claim 1, applied to a computer-readable storage medium and a computer, wherein the computer sends a ciphertext file to the computer-readable storage medium for executing a decryption operation, and then the computer-readable storage medium decrypts the ciphertext file and then transmits a decrypted ciphertext file to the computer; and the decryption method comprises the following steps:
S1: receiving the ciphertext file with content of x' + r' + h + sign from the computer;
S2: calculating digest data of x' + r' with a domestic cryptographic digest algorithm SM3 and comparing the digest data with a digest h: if the comparison succeeds, proceeding to a next step, or if the comparison fails, indicating that ciphertext file data has been corrupted rather than cracked;
S3: using a public key p as a signature verification private key of a domestic asymmetric cryptographic algorithm SM2, and verifying sign data with the domestic asymmetric cryptographic algorithm SM2: if the verification succeeds, proceeding to a next step, or if the verification fails, indicating that the ciphertext file data has been corrupted rather than cracked or a file encryption and decryption device of a legal user is not used;
S4: using a private key s as a decryption private key of the domestic asymmetric cryptographic algorithm SM2, and decrypting data of a ciphertext r' with the domestic asymmetric cryptographic algorithm SM2 to obtain a symmetric key r;
S5: decrypting a ciphertext x' with the symmetric key r to obtain plaintext data x; and
S6: returning the decrypted plaintext data x to the computer for storing a decrypted plaintext file.

3. A computer-readable storage medium, wherein the readable storage medium is internally provided with a file encryption and decryption chip recording a computer program, a domestic asymmetric cryptographic algorithm SM2, a domestic symmetric cryptographic algorithm SM4, and a domestic cryptographic digest algorithm SM3, and when the readable storage medium receives a plaintext file and an encryption task transmitted from a computer, the computer program is controlled by a processor to execute the security encryption method for computer files according to claim 1 and return an encrypted ciphertext file to the computer.

4. A computer-readable storage medium, wherein the readable storage medium is internally provided with a file encryption and decryption chip recording a computer program, a domestic asymmetric cryptographic algorithm SM2, a domestic symmetric cryptographic algorithm SM4, and a domestic cryptographic digest algorithm SM3, and when the readable storage medium receives a ciphertext file and a decryption task transmitted from a computer, the computer program is controlled by a processor to execute the security decryption method for computer files according to claim 2 and return a decrypted plaintext file to the computer.
